# EUROPÄISCHE PATENTSCHRIFT

(11) **EP 2 570 235 B1**
(45) Veröffentlichungstag und Bekanntmachung des Hinweises auf die Patenterteilung: **20.11.2013**
(21) Anmeldenummer: 12006456.3
(22) Anmeldetag: 14.09.2012
(51) Int. Cl.: B23Q 11/08

(54) **Faltenbalglose Schutzabdeckung für Werkzeugmaschinen**
Protective cover for machine tools without bellows
Revêtement de protection sans soufflet à plis pour machines-outils

(30) Priorität: 16.09.2011 DE 102011113374
(43) Veröffentlichungstag der Anmeldung: 20.03.2013
(73) Patentinhaber: Möller Werke GmbH, 33649 Bielefeld (DE)
(72) Erfinder: Cakmak, Buelent, 33649 Bielefeld (DE); Kaufmann, Thomas, 33334 Gütersloh (DE); Weißberg, Wolfgang, 33604 Bielefeld (DE)
(74) Vertreter: Schober, Mirko

(56) Entgegenhaltungen:
- EP-A1- 1 597 511
- EP-A1- 1 871 568

## Beschreibung

Die Erfindung betrifft eine faltenbalglose Schutzabdeckung für Werkzeugmaschinen nach dem Oberbegriff des Anspruchs 1.

Faltenbalglose Schutzabdeckungen sind z.B. aus DE 202 20 812 U1 bekannt. Diese weisen immer sich teilweise überdeckende Stahllamellen auf, welche paarweise einander überlappen und etwa im rechten Winkel an gegeneinander in einer Auszugrichtung verschieblichen Quertraversen auf der Innenseite der Abdeckung angebracht sind. Die jeweils benachbarten Quertraversen sind mit federnden, zusammengenieteten, mehrteiligen Verbindungselementen gekoppelt, die dafür sorgen, dass die Quertraversen der Schutzabdeckung beim Zusammenziehen eine Dämpfung erfahren und das Ausziehen der Schutzabdeckung durch Entspannen der Verbindungselemente unterstützt wird.

Aus DE 10 2005 013 496 B4 ist ein Faltenbalg bekannt, dessen Rahmenteile durch miteinander vernietete mehrteilige Blattfederelmente verbunden sind. Die mehrteiligen Blattfederelemente sollen das Zusammenziehen der Schutzabdeckung unterstützen.

Aus EP 1 871 568 ist bekannt, zusätzlich zur Stabilisierung Vertikalstabilisierungselemente anzuordnen, um ein gegenseitiges Verschieben oder Durchhängen der Quertraversen in Längsrichtung derselben zu verhindern.

In dem Anwendungsfall, in welchem mindestens ein Teil der durch Quertraversen und Lamellen gebildeten Schutzabdeckung etwa parallel zum Boden bzw. zur Aufstellfläche einer mit der entsprechenden Schutzabdeckung bestückten Werkzeugmaschine angeordnet ist, d.h. wenn die durch die Lamellen gebildete Ebene etwa parallel zum Boden angeordnet ist oder wenn eine solche Schutzabdeckung zumindest schräg zum Boden verläuft (beide Fälle parallel oder schräg zum Boden werden im Sinne dieser Anmeldung auch kurz als hängende Anordnung oder Überkopfanordnung der Schutzabdeckung bezeichnet), kommt es dazu, dass die Abdeckung infolge der Gewichtskraft insbesondere der metallischen Bestandteile in der Mitte der Quertraversen durchhängt. Die Lamellen liegen jedenfalls in diesem mittleren Bereich nicht mehr aneinander an und erfüllen ihre Schutzfunktion unter Umständen nicht mehr.

Bei der hängenden Anordnung ist daher eine Vorspannung erforderlich, die der Gewichtskraft entgegen wirkt und die dafür sorgt, dass das Durchhängen der überlappenden Lamellen vermieden wird.

Dazu ist in DE 102 23 044 vorgeschlagen worden, auf der den Lamellen abgewandten Außenseite der Abdeckung Zusatz- oder Gegenlamellen anzubringen. In EP 1 597 511 ist die Schutzabdeckung aus im Querschnitt U-förmigen Profilen zusammengesetzt, die teleskopartig ineinander greifen, wobei die beiden Schenkel des U-Profils jeweils die Funktion der Lamellen bzw. Gegenlamellen erfüllen.

Beide Vorschläge, die eine rückseitige Lamelle oder U-Abkantung einbeziehen, sind mit einem hohen technischen Aufwand und infolgedessen mit hohen Kosten verbunden.

Aufgabe der vorliegenden Erfindung ist es, eine Schutzabdeckung der oben genannten Art anzugeben, die starke, senkrecht zur Auszugebene - vor allem bei Überkopfanwendungen - auftretende Belastungen auf die Schutzabdeckung kompensieren kann, ohne dass auf der Außenseite der Abdeckung zusätzliche Lamellen oder Abkantungen vorgesehen werden müssen.

Gelöst wird diese Aufgabe durch eine Schutzabdeckung, insbesondere über Kopf angeordnete Schutzabdeckung, mit den Merkmalen des Anspruchs 1. Vorteilhafte Ausführungsformen finden sich in den abhängigen Ansprüchen.

Erfindungsgemäß wird vorgeschlagen, als Vorspannelemente keine Lamellen oder Abkantungen vorzusehen, sondern im Querschnitt etwa, insbesondere in ihrer entspannten Lage, V-förmige Blattfederelemente zwischen benachbarten Quertraversen vorzusehen, deren Knick- oder Biegelinie senkrecht zur Auszugrichtung und senkrecht zum Längsverlauf der Quertraversen steht. Überraschend hat sich herausgestellt, dass die erfindungsgemäßen Vorspannelemente in dieser Orientierung etwaige Gegenlamellen vollständig ersetzten können. Zwischen benachbarten Quertraversen sind bevorzugt eine Mehrzahl Vorspannelemente angeordnet, die bevorzugt paarweise entgegengesetzt orientiert sind. Dadurch erreicht man eine Kompensation von möglicherweise in Längsrichtung der Lamellen oder Quertraversen auftretenden Kräften, die zu einer gegenseitigen Verschiebung in Längsrichtung der Lamellen führen können. Vorteilhaft ist, wenn ca. 3 bis 4 Vorspannelemente pro Meter bezogen auf die Länge der Längserstreckung der Lamelle oder Quertraverse vorgesehen sind.

Bevorzugt sind die Blattfederelemente jeweils aus einstückigen Streifen aus Kunststoffmaterial ausgebildet. Diese lassen sich besonders einfach und kostengünstig herstellen, wobei auch Nietverbindungen innerhalb der Blattfederelemente nicht mehr erforderlich sind, was wiederum Kosten einspart und die Schutzabdeckung mit weniger Gewicht ausgebildet werden kann. Diese Blattfederelemente werden gebildet durch Knicken oder Biegen entlang der mittig im Streifen liegenden Knick- oder Biegelinie.

Die Blattfederelemente können bevorzugt an ihren Enden Befestigungsabschnitte aufweisen, die z.B. in Form von Befestigungsstegen ausgebildet sein können und mit denen die Blattfederelemente an den Quertraversen befestigt oder verbunden sind. Es können auch mehrere Blattfederelemente miteinander, insbesondere einstückig, verbunden sein, so dass sie eine Mehrzahl Quertraversen in Auszugsrichtung überspannen. Die Verbindung der Blattfederelemente mit den Quertraversen kann z.B. über eine Niet- oder Knöpfverbindung erfolgen, es kann aber auch eine Steckverbindung vorgesehen sein.

Weiter bevorzugt ist, dass die Breite der Blattfederelemente in Verlaufsrichtung ihrer Biege- oder Knicklinie mindestens das 20-fache der Dicke des verwendeten Blattfedermaterials beträgt. Auch kann vorgesehen sein, dass die genannte Breite der Blattfederelemente mindestens halb so groß ist, wie das maximale Auszugmaß des Blattfederelements in Auszugrichtung.

Die bevorzugt einstückig ausgebildeten, insbesondere aus einem Kunststoffstreifen bestehenden, Blattfederelemente können mit der jeweiligen Quertraverse fest oder lösbar verbunden sein. Bevorzugt sind sie vernietet oder durch Knöpfen lösbar verbunden. Dabei hat sich als nützlich herausgestellt, dass die Befestigungsabschnitte mit wenigstens zwei in Verlaufsrichtung der Biege- oder Knicklinie nebeneinander angeordneten Niet- oder Knöpfverbindungen mit den jeweiligen Quertraversen verbunden sind.

Mit der Erfindung erreicht man nicht nur eine hinreichend gute Lamellenpressung der überlappenden Lamellen auf der Innenseite der Schutzabdeckung, sondern die Vorspannelemente können aus Kunststoff gefertigt werden, was die Herstellkosten und die durchhängende Masse reduziert. Weiter können die erfindungsgemäßen Vorspannelemente auch an der Auszugdämpfung bzw. der Schwingung der Schutzabdeckung begünstigend wirken.

Insbesondere durch die Massereduzierung können Schutzabdeckungen mit großen Spannbreiten, d.h. mit besonders langen Quertraversen, hergestellt werden.

Bevorzugt sind die Blattfederelemente daher aus Kunststoff, insbesondere Polypropylen, Polyethylen oder Polypropylen-Copolymer gebildet.

Die Erfindung wird nachfolgend anhand der Figuren 1 bis 4 näher erläutert. Es zeigen:
- Figur 1 -: eine perspektivische Draufsicht auf die Außenseite einer erfindungsgemäßen Schutzabdeckung in Überkopf- bzw. hängender Anordnung,
- Figur 2 -: eine Ausschnittvergrößerung aus Figur 1,
- Figur 3 -: eine Querschnittansicht mit einem Querschnitt in der X-Z-Ebene der erfindungsgemäßen Schutzabdeckung,
- Figur 4 -: eine perspektivische Draufsicht auf einen Teil einer erfindungsgemäßen Schutzabdeckung nach einer weiteren Ausführungsform.

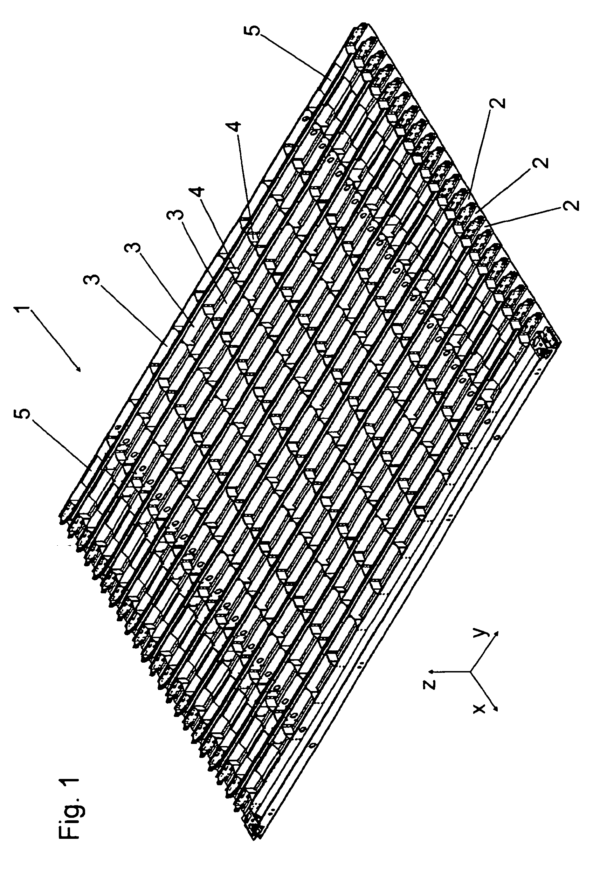

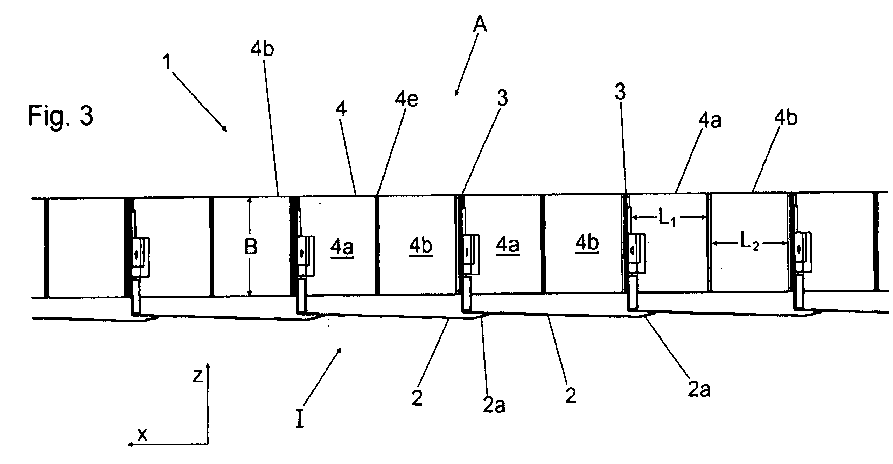

Die in der Figuren 1 bis 4 dargestellte Schutzabdeckung 1 (im Folgenden auch kurz Abdeckung genannt), welche in den dargestellten Beispielen über Kopf angeordnet ist, ist aus einer Mehrzahl parallel angeordneter Quertraversen 3 gebildet, welche sich in ihrer Längsrichtung Y quer zur Auszugrichtung X erstrecken. Die Quertraversen 3 sind miteinander über Kopplungs- und Stabilisierungselemente 5 gekoppelt und weisen - wie insbesondere in der Schnittdarstellung in Figur 3 gezeigt - auf der Innenseite I gegenseitig überlappende Lamellen 2 auf, welche etwa rechtwinklig zu den Quertraversen 3 verlaufen und sich entlang der Quertraversen 3 in deren Längsrichtung erstrecken. Um eine dichte Anlage an eine benachbarte Lamelle 2 zu erreichen, weisen die Lamellen an ihrer freien Längsseite einen in Richtung der Außenseite A der Abdeckung abgewinkelten Abschnitt 2a auf, dessen freie Längsseite auf der Nachbarlamelle aufliegt. Um diese Auflage sicherzustellen, sind Vorspannelemente vorgesehen, die nach dem Stand der Technik als Zusatzlamellen an der Außenseite A angebracht werden. Erfindungsgemäß werden im Querschnitt (d.h. Schnitt in Richtung Z senkrecht zur Ebene X-Y) etwa V-förmige Blattfederelemente 4 aus Kunststoff zwischen benachbarten Quertraversen 3 eingesetzt.

Die Blattfederelemente 4 sind im gezeigten Beispiel einstückige Kunststoffstreifen, bevorzugt aus Polypropylen, Polyethylen oder einem Polypropylen-Copolymer. Bevorzugt sind die Blattfederelemente 4 zwischen benachbarten Quertraversen 3 paarweise entgegengesetzt angeordnet, so dass beim Zusammenschieben bzw. Aufziehen der Abdeckung 1 auftretende Seitenkräfte kompensiert werden, die eine gegenseitige Verschiebung der Quertraversen 3 und damit der Lamellen 2 in deren Längsrichtung Y vermeiden.

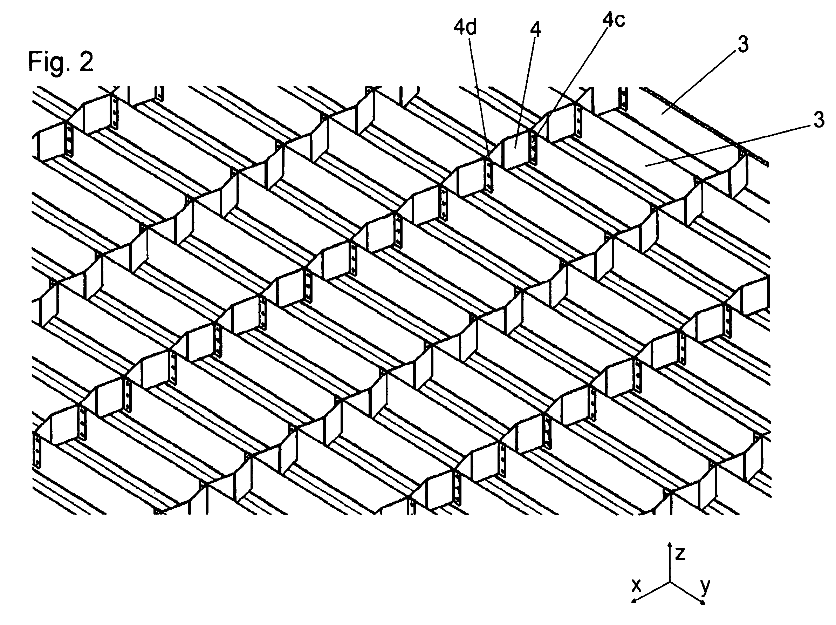

Wie man insbesondere den Figuren 2 und 3 entnimmt, weisen die Blattfederelemente 4 in der Mitte eine sich in Richtung Z senkrecht zur X-Y-Ebene erstreckende Knick- oder Biegelinie 4e auf. Zu beiden Seiten der Knick- oder Biegelinie 4e, die bevorzugt auch Symmetrielinie des Blattfederelements 4 ist, weist das Blattfederelement 4 Federschenkel 4a, 4b auf, an welche sich jeweils an der der Knick- oder Biegelinie 4e abgewandten Seite Befestigungsabschnitte 4d bzw. 4c anschließen, die bevorzugt gegenüber den Federschenkeln abgewinkelt ausgebildet sind. Die Federschenkel 4a, 4b bilden zusammen die im Querschnitt V-förmige Form mit einem dazwischen definierten - beim Zusammenschieben und Ausziehen der Abdeckung veränderlichen - Öffnungswinkel aus. Die Befestigungsabschnitte 4c, 4d an den gegenüberliegenden freien Enden der Blattfederelemente 4 sind lösbar oder fest mit den Quertraversen 3 verbunden. Dies kann durch Nietverbindungen oder auch durch Knöpfe geschehen, wobei bevorzugt mindestens zwei Knöpfe oder Nieten pro Befestigungsabschnitt 4c, 4d vorgesehen sind. Die wenigstens zwei Knöpfe oder Nieten sollten bevorzugt übereinander (d.h. mit wenigstens einer Z-Komponente beabstandet) angeordnet sein.

Bei dieser Ausführung ergibt sich insbesondere auch bei hängender Anbringung der in den Figuren gezeigten Abdeckung 1 ein ausreichender Anpressdruck der benachbarten Innenlamellen 2. Dieser resultiert daraus, dass bei der gewählten Geometrie die Blattfederelemente 4 der Verformung durch Torsion entgegen wirken, welche infolge der durch die hängende oder über Kopf angeordnete Abdeckung 1 wirkenden Kräfte verursacht wird. Die erforderliche Vorspannung auf die Lamellen 2 bleibt auch ohne Gegenlamellen bei der Erfindung erhalten.

Besonders vorteilhaft ist in diesem Zusammenhang, wenn zwischen benachbarten Quertraversen wenigstens drei oder vier Blattfederelemente pro Meter Quertraverse 3 bzw. pro Meter Lamelle 2 (in Längsrichtung Y betrachtet) vorgesehen sind. Dabei ist bevorzugt eine Dicke der Blattfederelemente von etwa 0,8 bis 1,3 mm, bevorzugt etwa 1 mm, vorgesehen. Zudem ist es vorteilhaft, dass die Breite B (vgl. Figur 3) der Blattfederelemente 4 in Verlaufsrichtung Z der Biege- oder Knicklinie 4e mindestens das 20-fache der Dicke des verwendeten Blattfedermaterials beträgt. Weiter hat sich als vorteilhaft herausgestellt, dass die Breite der Blattfederelemente 4 in Verlaufsrichtung Z der Biege- oder Knicklinie 4e mindestens halb so groß ist, wie das maximale Auszugmaß des Blattfederelements 4 in Auszugrichtung X. Das maximale Auszugmaß ist dabei durch die Summe (L1 + L2) der senkrecht zur Richtung Z gemessenen Längen L1 des Schenkels 4a und L2 des Schenkels 4b bestimmt. Bevorzugt sind beide Schenkel L1, L2 gleich lang (d.h. dann gilt L1 = L2).

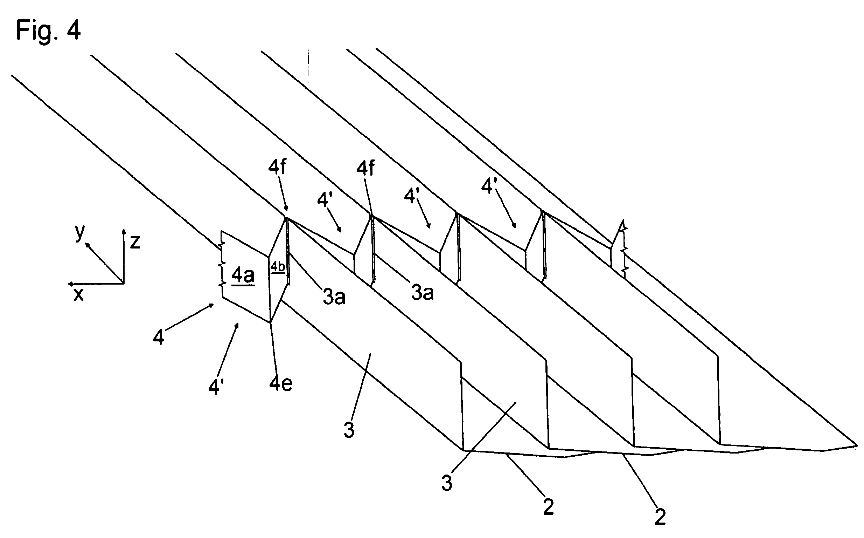

In Figur 4 ist eine Alternative des erfindungsgemäßen Blattfederelements 4 gezeigt. Das Blattfederelement 4 ist aus eine Mehrzahl Schenkel 4a, 4b aufweisenden V-förmigen Einzelelementen 4' gebildet. Bevorzugt ist eine einstückige Kette aus solchen Elementen, die sich in Auszugrichtung X erstreckt, wobei im gezeigten Beispiel jeweils ein Schenkelpaar 4a, 4b zwischen zwei Quertraversen 3 angeordnet ist. Die die Einzelelemente 4' bildenden Schenkelpaare 4a, 4b sind miteinander entlang zweiter Knick- oder Biegelinien 4f (die Knick- oder Biegelinien 4e sind dann erste Knickoder Biegelinien) verbunden oder wie eine Ziehharmonika einstückig aus einem Kunststoffstreifen ausgebildet. Zur Materialwahl gelten die obigen Ausführungen entsprechend. Zur Verbindung der Einzelblattfederelemente 4' mit den Quertraversen 3 sind diese im Bereich der zweiten Knick-oder Biegelinien 4f untereinander verbunden oder einstückig ausgebildet und ferner im gezeigten Beispiel in ihrem Verbindungsbereich (insbesondere an den Knick- oder Biegelinien 4f) in in Z-Richtung verlaufende schlitzartige Aussparungen 3a in die Quertraversen eingelassen und ggf. dort zusätzlich fixiert. Die zweiten Knick- der Biegelinien 4f liegen dabei bevorzugt in der durch die jeweilige Quertraverse 3 definierten Ebene bzw. so, dass die Knick- oder Biegelinien 4f nicht zwischen benachbarten Quertraversen 3 liegen.

## Patentansprüche

1. Faltenbalglose Schutzabdeckung (1) für Werkzeugmaschinen, insbesondere über Kopf angeordnete Schutzabdeckung, die in einer Auszugsrichtung (X) längenveränderlich ausgebildet ist, mit einer Innenseite (I), die durch überlappende gegeneinander in Auszugsrichtung (X) verschiebliche Lamellen (2) gebildet wird, wobei die Lamellen (2) jeweils an senkrecht zur Auszugrichtung (X) zueinander parallel angeordneten Quertraversen (3) angeordnet sind, und einer Außenseite (A), wobei jeweils benachbarte Quertraversen (3) miteinander gekoppelt sind, und wobei Vorspannelemente (4) vorgesehen sind, die die gegenseitige Anlage der die Innenseite (I) bildenden Lamellen (2) bewirken, wobei
die Außenseite (A) lamellenfrei ausgebildet ist, **dadurch gekennzeichnet, dass** die Vorspannelemente (4) aus Kunststoff gebildete Blattfederelemente sind, welche eine mittig zwischen zwei benachbarten Quertraversen (3), in einer Richtung (Z) senkrecht zur Längsrichtung (Y) der Quertraversen (3) und senkrecht zur Auszugsrichtung (X) verlaufende Biege- oder Knicklinie (4e) und in dieser Richtung (Z) einen etwa V-förmigen Querschnitt aufweisen.

2. Schutzabdeckung nach Anspruch 1,
**dadurch gekennzeichnet,**
**dass** die Blattfederelemente (4) an den Enden Befestigungsabschnitte aufweisen, mit denen sie an den Quertraversen (3) befestigt sind.

3. Schutzabdeckung nach Anspruch 1 oder 2,
**dadurch gekennzeichnet,**
**dass** zwischen zwei benachbarten Quertraversen (3) eine Mehrzahl Blattfederelemente (4) vorgesehen sind.

4. Schutzabdeckung nach einem der Ansprüche 1 bis 3,
**dadurch gekennzeichnet,**
**dass** das Blattfederelement (4) mit zwei sich jeweils zwischen der Biege- oder Knicklinie (4e) und den Befestigungsabschnitten (4c, 4d) des Blattfederelements erstreckenden Schenkeln (4a, 4b) ausgebildet ist, welche zueinander den Öffnungswinkel des etwa V-förmigen Querschnitts des Blattfederelements (4) bestimmen.

5. Schutzabdeckung nach Anspruch 3 oder 4,
**dadurch gekennzeichnet,**
**dass** zwischen zwei benachbarten Quertraversen (3) wenigstens zwei zueinander benachbart angeordnete Blattfederelemente (4) angebracht sind, die, bezogen auf ihren etwa V-förmigen Querschnitt, entgegengesetzt angeordnet sind.

6. Schutzabdeckung nach einem der vorigen Ansprüche,
**dadurch gekennzeichnet,**
**dass** die Blattfederelemente (4) aus Kunststoff bestehen, vorzugsweise aus einem Kunststoff, ausgewählt aus der Gruppe Polypropylen, Polyethylen, Polypropylen-Copolymer.

7. Schutzabdeckung nach einem der vorigen Ansprüche,
**dadurch gekennzeichnet,**
**dass** die Breite der Blattfederelemente (4) in Verlaufsrichtung (Z) der Biege- oder Knicklinie (4e) mindestens das 20-fache der Dicke des verwendeten Blattfedermaterials beträgt.

8. Schutzabdeckung nach einem der vorigen Ansprüche,
**dadurch gekennzeichnet,**
**dass** die Breite der Blattfederelemente (4) in Verlaufsrichtung (Z) der Biege- oder Knicklinie (4e) mindestens halb so groß ist, wie das maximale Auszugmaß des Blattfederelements (4) in Auszugrichtung (X).

9. Schutzabdeckung nach einem der vorigen Ansprüche,
**dadurch gekennzeichnet,**
**dass** die Befestigungsabschnitte (4c, 4d) mit der jeweiligen Quertraverse, bevorzugt mit wenigstens zwei in Verlaufsrichtung (Z) der Biege- oder Knicklinie (4e) nebeneinander angeordneten Nieten oder Knöpfen, vernietet oder durch Knöpfen lösbar verbunden sind.

10. Schutzabdeckung nach einem der vorigen Ansprüche,
**dadurch gekennzeichnet,**
**dass** zwischen benachbarten Quertraversen (3) wenigstens drei oder vier Blattfederelemente (4) pro Meter Länge in Längsrichtung (Y) der Quertraverse oder Lamelle (2) vorgesehen sind.

11. Schutzabdeckung nach einem der vorigen Ansprüche,
**dadurch gekennzeichnet,**
**dass** die Blattfederelemente (4) jeweils einstückig ausgebildete aus jeweils einem Kunststoffstreifen bestehende Blattfederelemente (4) sind.

12. Schutzabdeckung nach einem der vorherigen Ansprüche,
**dadurch gekennzeichnet,**
**dass** mehrere Blattfederelemente (4) miteinander einstückig verbunden sind.

## Claims

1. Protective cover (1) without bellows for machine tools, more particularly an overhead protective cover which is formed length-adjustable in an extension direction (X), with an inner side (I) which is formed by overlapping slats (2) which are displaceable relative to one another in the extension direction (X), wherein the slats (2) are each arranged on cross bars (3) mounted parallel to one another perpendicular to the extension direction (X), and an outer side (A) wherein adjacent cross bars (3) are each coupled to one another, and wherein pre-tensioning elements (4) are provided which cause the slats (2) which form the inside (I) to bear against one another, wherein the outer side (A) is formed free of slats,
**characterised in that**
the pretensioning elements (4) are leaf spring elements made from plastics which have a deflection or bending line (4e) running centrally between two adjoining cross bars (3), in one direction (Z) perpendicular to the longitudinal direction (Y) of the cross bars (3) and perpendicular to the extension direction (X), and which have an approximately V-shaped cross-section in this direction (Z).

2. Protective cover according to claim 1,
**characterised in that**
the leaf spring elements (4) have at the ends fastening sections with which they are fastened on the cross bars.

3. Protective cover according to claim 1 or 2,
**characterised in that**
a number of leaf spring elements (4) are provided between two adjacent cross bars (3).

4. Protective cover according to one of claims 1 to 3,
**characterised in that**
the leaf spring element (4) is formed with two arms (4a, 4b) each extending between the deflection or bending line (4e) and the fastening sections (4c, 4d) of the leaf spring element and which determine relative to one another the opening angle of the approximately V-shaped cross-section of the leaf spring element (4).

5. Protective cover according to claim 3 or 4,
**characterised in that**
between two adjacent cross bars (3) there are at least two leaf spring elements (4) which are disposed adjacent one another and are attached opposite one another in relation to their approximately V-shaped cross-section.

6. Protective cover according to one of the preceding claims,
**characterised in that**
the leaf spring elements (4) are made of plastics, preferably of a plastics selected from the group polypropylene, polyethylene, polypropylene-copolymer.

7. Protective cover according to one of the preceding claims,
**characterised in that**
the width of the leaf spring elements (4) in the running direction (Z) of the deflection or bending line (4e) amounts to at least 20 times the thickness of the leaf spring material which is used.

8. Protective cover according to one of the preceding claims,
**characterised in that**
the width of the leaf spring elements (4) in the running direction (Z) of the deflection or bending line (4e) is at least half as large as the maximum extension measurement of the leaf spring element (4) in the extension direction (X).

9. Protective cover according to one of the preceding claims,
**characterised in that**
the fastening sections (4c, 4d) are riveted or detachably connected by studs to the relevant cross bars, preferably with at least two rivets or studs which are arranged side by side in the running direction (Z) of the deflection or bending line (4e).

10. Protective cover according to one of the preceding claims,
**characterised in that**
at least three or four leaf spring elements (4) are provided per metre in the longitudinal direction (Y) of the cross bar or slats (2) between adjacent cross bars (3) .

11. Protective cover according to one of the preceding claims,
**characterised in that**
the leaf spring elements (4) are each leaf spring elements (4) formed in one piece and each consisting of a plastics strip.

12. Protective cover according to one of the preceding claims,
**characterised in that**
several leaf spring elements (4) are connected to one another in one piece.

## Revendications

1. Revêtement de protection sans soufflet à plis pour machines-outils, en particulier revêtement de protection disposé la tête en bas, modifiable en longueur, dans une direction de déploiement) (X), avec une face intérieure (I), qui est formée par des lamelles (2) pouvant être déplacées dans la direction de déploiement (X) en se chevauchant les unes les autres, lesdites lamelles (2) étant disposées chacune sur des traverses (3), qui sont orientées perpendiculairement par rapport à la direction de déploiement (X) et avec une face extérieure (A), des traverses (3) voisines étant respectivement couplées ensemble, et sachant que des éléments de précontrainte (4), qui assurent le positionnement mutuel des lamelles (2) formant la face intérieure (I), sont prévus, la face extérieure (A) étant exempte de lamelles,
**caractérisé en ce que**
jes éléments de précontrainte (4) sont des éléments de ressort à lame, réalisés en matière synthétique, qui présentent une ligne de flexion ou de pliage (4e), qui s'étend, centralement entre deux traverses (3) voisines, dans une direction (Z), perpendiculairement à la direction longitudinale (Y) des traverses (3) et perpendiculairement à la direction de déploiement (X), et sont dotés d'une section transversale approximativement en V dans cette direction (Z).

2. Revêtement de protection sans soufflet à plis selon la revendication 1,
**caractérisé en ce que**
les éléments de ressort à lame (4) sont pourvus, aux extrémités, de sections de fixation, au moyen desquelles ils sont fixés sur les traverses (3).

3. Revêtement de protection sans soufflet à plis selon revendication 1 ou 2,
**caractérisé en ce que**,
entre deux traverses (3) voisines, est prévue une pluralité d'éléments de ressort à lame (4).

4. Revêtement de protection sans soufflet à plis selon l'une des revendications 1 à 3,
**caractérisé en ce que**
l'élément de ressort à lame (4) est réalisé avec deux ailes (4a, 4b), qui, s'étendant entre la ligne de flexion ou de pliage (4e) de l'élément de ressort à lame (4) et que les sections de fixation (4c, 4d), déterminent, l'une par rapport à l'autre, l'angle d'ouverture de la section transversale approximativement en V de l'éléments de ressort à lame (4).

5. Revêtement de protection sans soufflet à plis selon revendication 3 ou 4,
**caractérisé en ce que**,
entre deux traverses (3) voisines, sont installés au moins deux éléments de ressort à lame (4) voisins l'un de l'autre, qui, par rapport à leur section transversale, approximativement en forme de V, sont dirigés à l'opposé l'un de l'autre.

6. Revêtement de protection sans soufflet à plis selon l'une des revendications précédentes,
**caractérisé en ce que**
les éléments de ressort à lame (4) sont réalisés en matière synthétique, de préférence en une matière synthétique, choisie dans le groupe, qui comprend le polypropylène, le polyéthylène, le copolymère de polypropylène.

7. Revêtement de protection sans soufflet à plis selon l'une des revendications précédentes,
**caractérisé en ce que**
la largeur des éléments de ressort à lame (4) dans la direction de déroulement (Z) de la ligne de flexion ou de pliage (4e) est au moins 20 fois supérieure à l'épaisseur du matériau de ressort à lame utilisé.

8. Revêtement de protection sans soufflet à plis selon l'une des revendications précédentes,
**caractérisé en ce que**
la largeur des éléments de ressort à lame (4) dans la direction de déroulement (Z) de la ligne de flexion ou de pliage (4e) est au moins égale à la moitié de la grandeur de la dimension de déploiement maximale de l'élément de ressort à lame (4) dans la direction de déploiement (X) .

9. Revêtement de protection sans soufflet à plis selon l'une des revendications précédentes,
**caractérisé en ce que**
les sections de fixation (4c, 4d) sont rivetées ou reliées, de manière amovible, aux moyens de boutons, à la traverse respective, de préférence avec au moins deux rivets ou boutons, qui sont disposés l'un à côté de l'autre, dans la direction de déroulement (Z) de la ligne de flexion ou de pliage (4e).

10. Revêtement de protection sans soufflet à plis selon l'une des revendications précédentes,
**caractérisé en ce que**
trois ou quatre éléments de ressort à lame (4) au moins sont prévus par mètre de longueur, entre des traverses (3) voisines, dans la direction longitudinale (Y) de la traverse ou de la lamelle (2).

11. Revêtement de protection sans soufflet à plis selon l'une des revendications précédentes,
**caractérisé en ce que**
les éléments de ressort à lame (4) sont respectivement formés d'une pièce par des éléments de ressort à lame (4), qui consistent chacun en une bande de matière synthétique.

12. Revêtement de protection sans soufflet à plis selon l'une des revendications précédentes,
**caractérisé en ce que**
plusieurs éléments de ressort à lame (4) sont reliés ensemble.
